# EUROPEAN PATENT APPLICATION

(11) **EP 1 387 430 A1**
(43) Date of publication of application: **04.02.2004**
(21) Application number: 02707125.7
(22) Date of filing: 20.03.2002
(51) Int. Cl.: H01M 14/00, H01L 31/04

(54) **DYE-SENSITIZED SOLAR CELL**

(30) Priority: 26.03.2001 JP 2001088647; 26.03.2001 JP 2001088648; 26.03.2001 JP 2001088649
(71) Applicant: SHARP CORPORATION, Osaka 545 (JP); Dai-Ichi Kogyo Seiyaku Co., Ltd., Kyoto-shi, Kyoto 600-8873 (JP)
(72) Inventor: KOMIYA, Ryoichi, Uda-gun, Nara 633-2221 (JP); HAN, Liyuan, Kitakatsuragi-gun, Nara 635-0833 (JP); YAMANAKA, Ryohsuke, Gojo-shi, Nara 637-0014 (JP); ISHIKO, Eriko, 206, Gray Palace Lock I, Kyoto-shi, Kyoto 615-8018 (JP); KONO, Michiyuki, Neyagawa-shi, Osaka 572-0082 (JP)
(74) Representative: Strehl Schübel-Hopf & Partner
(86) International application number: PCT/JP2002/002727
(87) International publication number: WO 2002/078115

(57) **Abstract**

The invention provides a dye-sensitized solar cell including a transparent substrate, a transparent conductive film formed on a surface thereof, and a conductive substrate provided in a position opposed to the transparent conductive film, and further having a porous semiconductor layer, in which a dye is adsorbed, and an electrolyte between the transparent conductive film and the conductive substrate, wherein the electrolyte is a gel electrolyte containing a redox material and a solvent capable of dissolving the same in a network structure formed by crosslinking at least one kind of compound A including an isocyanate group and at least one kind of compound B including an amino group. Otherwise, the electrolyte is a gel electrolyte containing a redox material and a solvent capable of dissolving the same in a network structure formed by crosslinking at least one kind of compound A including an isocyanate group and at least one kind of compound C including a carboxyl group and/or a hydroxyl group. Otherwise, the electrolyte is a polymer solid electrolyte containing redox material in a network structure formed by crosslinking at least one kind of compound A including an isocyanate group and at least one kind of compound D reactive with the isocyanate group. The configuration of the invention facilitates an electrolyte composition of the dye-sensitized solar cell, and simplifies process steps in the manufacture.

## Description

### TECHNICAL FIELD

The present invention relates to a dye-sensitized solar cell, and more particularly to a dye-sensitized solar cell employing a gel electrolyte containing a redox material and a solvent capable of dissolving the same in a network structure formed by crosslinking a compound having a specified structure, or a dye-sensitized solar cell employing a polymer solid electrolyte containing a redox material in a network structure formed by crosslinking a compound having a specified structure.

### BACKGROUND ART

The dye-sensitized solar cell is attracting attention widely because of a higher conversion efficiency among organic solar cells. As a semiconductor layer formed by a photoelectric converting material employed in such dye-sensitized solar cell, there is employed a semiconductor in which a spectral sensitizing dye having an absorption in the visible region is surfacially adsorbed.

For example Japanese Patent No. 2664194 describes a dye-sensitized solar cell employing a metal oxide semiconductor layer in which a spectral sensitizing dye formed by a transition metal complex is adsorbed on the surface of the semiconductor layer.

Also JP-B No. 8-15097 describes a dye-sensitized solar cell having a layer of a spectral sensitizing dye such as a transition metal complex on the surface of a titanium oxide semiconductor layer doped with metal ions. Also JP-A No. 7-249790 describes a dye-sensitized solar cell employing a semiconductor layer as a photoelectric converting material obtained by heat refluxing an ethanol solution of a spectral sensitizer on the surface of the semiconductor layer.

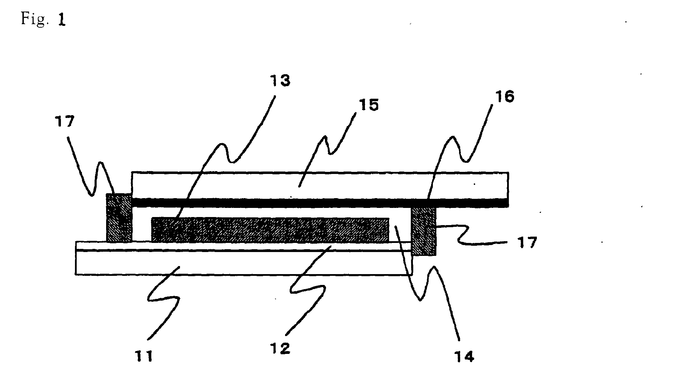

A process for preparing a dye-sensitized solar cell utilizing an ordinary liquid electrolyte will be explained with reference to Fig. 1.

Fig. 1 is a schematic cross-sectional view showing a structure of a prior dye-sensitized solar cell.

At first, on a surface of a transparent substrate 11, there is formed a transparent conductive film 12, then a porous semiconductor layer 13 such as titanium oxide is formed thereon, and a dye is adsorbed in the porous semiconductor layer 13. Then a counter electrode 15 is coated with a catalyst such as a platinum film 16, and the transparent substrate 11 and the counter electrode 15 are superposed in such a manner that the porous semiconductor layer 13 and the platinum film 16 are opposite to each other. Then lateral faces of the transparent substrate 11 and the counter electrode 15 are sealed for example with an epoxy resin 17, and a liquid electrolyte containing a redox material is poured therein to form a liquid electrolyte layer 14, thereby completing a dye-sensitized solar cell.

In order to prevent liquid leakage from the liquid electrolyte layer 14, JP-A Nos. 8-236165 and 9-27352 describe a dye-sensitized solar cell in which the liquid electrolyte layer is solidified. A following method is known for solidifying the liquid electrolyte layer.

At first, in a monomer solution obtained by dissolving a monomer represented by a following general formula: 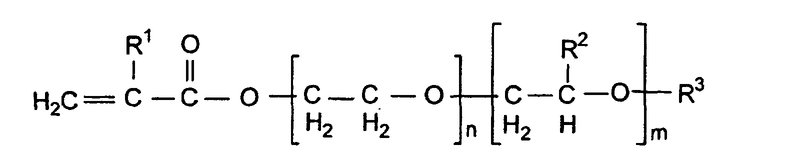 (wherein R¹ and R² each represents a hydrogen atom or a methyl group; R³ represents a hydrogen atom or a lower alkyl group with 1 or more carbon atoms; n represents an integer equal to or larger than 1; m represents an integer equal to or larger than 0; and m/n is within a range from 0 to 5) in ethylene glycol, an iodide constituting a redox material (such as lithium iodide) is dissolved, and such solution is impregnated in a porous semiconductor layer and is subjected to polymerization by irradiation of an ultraviolet light or by heat treatment to produce a polymer compound. Thereafter iodine, constituting another redox material, is injected by sublimation to obtain a solidified liquid electrolyte layer.

Also JP-A No. 7-320782 (Sanyo Electric) describes a gel electrolyte utilizing urethane as a lithium ion conducting material. In this case there are employed three or more monomers, and the gel electrolyte is prepared by impregnating a polymer compound with an electrolyte solution.

Also JP-A No. 2000-15006 discloses a opto-electric device employing a polymer solid electrolyte employing alkylene oxide as a polymer network and totally free from solvent.

However, the above-mentioned JP-A No. 9-27352 describes a opto-electric device utilizing a polymer network of a polyether-type monomer, but is associated with a drawback that, since the monomer is crosslinked by a radical polymerization, the polymerization is hindered in case iodine employed in the dye-sensitized solar cell is present in the monomer prior to the crosslinking. It is also difficult to quantify an iodine concentration in the gel electrolyte, since iodine is introduced after the polymerization.

Also JP-A No. 7-320782 relates to a solid electrolyte secondary battery and does not describe a method for preparing an electrolyte inside an electrode. Also in a dye-sensitized solar cell, since the porous semiconductor layer is formed with particles of a size in the order of a nanometer, it is more difficult to cause the gel electrolyte to penetrate into pores than in a lithium secondary battery which employs an electrode material of a size in the order of a micrometer. For this reason, the technology disclosed in JP-A No. 7-320782 is difficult to apply to a dye-sensitized solar cell.

Also according to the technology described in JP-A NO. 2000-15006, being based on polyalkylene oxide of a relatively high molecular weight, it is difficult for the gel electrolyte to penetrate into the pores even if using a solvent for dilution and it is troublesome that the solvent has to be eliminated.

The present invention, which has been made in consideration of the drawbacks of the above-described prior technologies, is to provide a dye-sensitized solar cell including a polymer electrolyte, capable of controlling a composition of the electrolyte and simplifying process steps in the production, by employing a monomer that can execute a polymerization reaction and a crosslinking reaction even in the presence of iodine or the like in the monomer prior to crosslinking.

There is also provided a dye-sensitized solar cell including a polymer solid electrolyte, in which a precursor thereof having a relatively low viscosity prior to a crosslinking reaction can be directly introduced among the electrodes, whereby a simplification of process steps and a control of the electrolyte composition are rendered possible.

### DISCLOSURE OF THE INVENTION

A first dye-sensitized solar cell of the present invention is a dye-sensitized solar cell including a transparent substrate, a transparent conductive film formed on a surface thereof, and a conductive substrate provided in a position opposed to the transparent conductive film, and further having a porous semiconductor layer, in which a dye is adsorbed, and an electrolyte between the transparent conductive film and the conductive substrate, wherein the electrolyte is a gel electrolyte containing a redox material and a solvent capable of dissolving the same in a network structure formed by crosslinking at least one kind of compound A including an isocyanate group and at least one kind of compound B including an amino group.

At least either of the compounds A and B can be a compound having a polymer structure of a molecular weight of 500 to 50,000. Such polymer structure, either entirely or partially, is preferably one or more selected from a group of polyether, polyester, polycaprolactone, polysiloxane, polyolefin, polybutadiene, polyisoprene, polycarbonate and polyphosphazene.

Also a second dye-sensitized solar cell of the present invention is a dye-sensitized solar cell including a transparent substrate, a transparent conductive film formed on a surface thereof, and a conductive substrate provided in a position opposed to the transparent conductive film, and further having a porous semiconductor layer, in which a dye is adsorbed, and an electrolyte between the transparent conductive film and the conductive substrate, wherein the electrolyte is a gel electrolyte containing a redox material and a solvent capable of dissolving the same in a network structure formed by crosslinking at least one kind of compound A including an isocyanate group and at least one kind of compound C including a carboxyl group and/or a hydroxyl group, and wherein at least either of the compounds A and C is a compound having a polymer structure of a molecular weight of 500 to 100,000 and the polymer structure, either entirely or partially, is one or more selected from a group of polyether, polyester, polycaprolactone, polysiloxane, polyvinylpyrrolidone, polycarbonate and polyphosphazene.

In the aforementioned first and second dye-sensitized solar cells, as the solvent, there can be employed one or more selected from a group of carbonates, ethers, lactones, nitriles and alcohols. Also as the redox material, there can be employed a material formed by iodine and an iodide.

Also a third dye-sensitized solar cell of the invention is a dye-sensitized solar cell including a transparent substrate, a transparent conductive film formed on a surface thereof, and a conductive substrate provided in a position opposed to the transparent conductive film, and further having a porous semiconductor layer, in which a dye is adsorbed, and an electrolyte between the transparent conductive film and the conductive substrate, wherein the electrolyte is a polymer solid electrolyte containing redox material in a network structure formed by crosslinking at least a compound A including an isocyanate group and at least a compound D reactive with the isocyanate group.

The compound D can be a compound having an active hydrogen group. Such active hydrogen group is preferably one or more selected from a group of a carboxyl group, an amino group and a hydroxyl group.

At least either of the compounds A and D can be a compound having a polymer structure of a molecular weight of 500 to 20,000. Such polymer structure, either entirely or partially, is preferably one or more selected from a group of polyether, polyester, polycarbonate and polycaprolactone. Among these, the polyether structure can be, for example, represented by a following general formula (I) 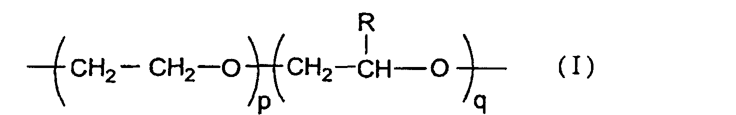 wherein R represents an alkyl group with 1 to 12 carbon atoms; and p and q each represents an integer equal to or larger than 0 but p and q do not assume 0 at the same time.

The redox material can be formed by iodine and an iodide.

### BRIEF DESCRIPTION OF THE DRAWINGS

Fig. 1 is a schematic cross-sectional view showing a layer structure of a principal part of a prior dye-sensitized solar cell; and
Fig. 2 is a schematic cross-sectional view showing process steps of a dye-sensitized solar cell employing a polymer electrolyte of the present invention.

### BEST MODE FOR CARRYING OUT THE INVENTION

In the following, preferred embodiments of the present invention will be shown but the present invention is not limited thereto.

### 1. First dye-sensitized solar cell

A first dye-sensitized solar cell of the invention is a dye-sensitized solar cell including a porous semiconductor layer in which a dye is adsorbed and an electrolyte layer between a transparent conductive film formed on a surface of a transparent substrate and a conductive substrate, featured in that a redox material in the electrolyte layer is retained in a network structure formed by crosslinking a compound having an isocyanate group and a compound having an amino group.

The above-mentioned compound A having an isocyanate group can be a compound including one or more isocyanate groups within a molecule. Specifically it can be (A1) an aromatic isocyanate such as tolylene diisocyanate, diphenylmethane diisocyanate, naphthalene diisocyanate or xylylene diisocyanate, (A2) an aliphatic isocyanate such as hexamethylene diisocyanate, or trimethylhexamethylene diisocyanate, or (A3) an alicyclic isocyanate such as isophorone diisocyanate or cyclohexyl diisocyanate, or can be an oligomer such as a dimer or a trimer, or a denatured member of (A1) to (A3).

There can also be employed (A4) an adduct of a lower molecule alcohol and an aromatic isocyanate, an aliphatic isocyanate or an alicyclic isocyanate, or (A5) a prepolymer of a molecular weight of 500 to 50,000 including one or more isocyanate groups and formed in advance by an addition reaction of a compound having a polymer structure and an isocyanate exemplified above.

The compound having a polymer structure is a compound having at least a functional group reactive with isocyanate group, preferably an active hydrogen group.

The polymer structure, either entirely or partially, is preferably formed by polyether, polyester, polycaprolactone, polyhexamethylene carbonate, polysiloxane, polyolefin, polybutadiene, polyisoprene, polystyrene, polyvinylpyridine, polyvinyl methyl ether, polyvinyl isobutyl ether, polyacrylic acid, polymethacrylic acid, polyacrylic acid alkyl ester, polymethacrylic acid alkyl ester, polyacrylamide, polyacrylonitrile, polyvinylidene anide, polyvinyl acetate, polyvinyl alcohol, polyvinyl chloride, polyvinylidene chloride, polyvinyl fluoride, polyvinylidene fluoride, polytetrafluoroethylene, polyvinylpyrrolidone, polyvinylcarbazole, polyethylene terephthalate, nylon, polyamide, polyimide, polycarbonate, polybenzimidazole, polyamine, polyimine, polysulfide, polyphosphazene or a natural polymer.

Among these, there is particularly preferred a structure including polyether, polyester, polycaprolactone, polysiloxane, polyolefin, polybutadiene, polyisoprene, polyacrylic acid, polymethacrylic acid, polyacrylamide, polyvinyl acetate, polyvinyl alcohol, polyvinylpyrrolidone, polycarbonate or polyphosphazene.

Also examples of the active hydrogen group include-SH, -NH, -NH₂, -CONH₂, -NHCONH-, -NHCOO-, Na⁺[CH(COOC₂H₅)], -CH₂NO₂, -OOH, -SiOH, -B(OH)₂, and -PH₃, among which preferred is -NH₂.

The compound A having the isocyanate group can be a combination of two or more of the above-mentioned compounds.

On the other hand, the compound B can be a compound having one or more amino group within a molecule, and can be, for example, an amine such as ethylene diamine, tolylene diamine, diphenylmethane diamine, diethylene triamine. Also examples of a compound having another active hydrogen group in addition to an amino group include an amino acid such as glycine or alanine, ethanolamine, and succinamide acid.

For the compound B, there can also be employed a compound having a polymer structure with a molecular weight of 500 to 50,000, including one or more amino groups within a molecule.

The polymer structure, either entirely or partially, is preferably formed by polyether, polyester, polycaprolactone, polyhexamethylene carbonate, polysiloxane, polyolefin, polybutadiene, polyisoprene, polystyrene, polyvinylpyridine, polyvinyl methyl ether, polyvinyl isobutyl ether, polyacrylic acid, polymethacrylic acid, polyacrylic acid alkyl ester, polymethacrylic acid alkyl ester, polyacrylamide, polyacrylonitrile, polyvinylidene anide, polyvinyl acetate, polyvinyl alcohol, polyvinyl chloride, polyvinylidene chloride, polyvinyl fluoride, polyvinylidene fluoride, polytetrafluoroethylene, polyvinylpyrrolidone, polyvinylcarbazole, polyethylene terephthalate, nylon, polyamide, polyimide, polycarbonate, polybenzimidazole, polyamine, polyimine, polysulfide, polyphosphazene or a natural polymer.

Among these, there is particularly preferred a structure including polyether, polyester, polycaprolactone, polysiloxane, polyolefin, polybutadiene, polyisoprene, polycarbonate or polyphosphazene.

The compound B can be a combination of two or more of the above-mentioned compounds.

A mixing ratio of the compound A and the compound B varies depending on a combination of the compound A and the compound B, and can be suitably determined according also to a crosslinking property of polymer and a performance required for the dye-sensitized solar cell.

In the invention, a gel electrolyte is constituted of a network structure formed by crosslinking the compound A and the compound B and a liquid electrolyte retained therein.

The liquid electrolyte is constituted of a redox material and a solvent, and can be one that is ordinarily usable in a battery or a solar cell and that is not particularly limited, but preferred examples include followings.

The redox material is preferably a combination of a metal iodide such as LiI, NaI, KI or CaI₂ and iodine, or a combination of a metal bromide such as LiBr, NaBr or CaBr₂ and bromine, among which particularly preferred is a combination of metal iodide and iodine.

The redox material preferably has a concentration within a range from 0.1 to 1.5 mol/L, particularly preferably 0.5 to 1.5 mol/L.

The solvent is preferably a non-protonic solvent such as a cyclic ester, a cyclic carbonate ester, a cyclic ether, a linear carboxylate ester, a linear carbonate ester, or a sulforane. Such solvent may be employed singly or in a combination of two or more kinds.

In a solar cell, the conversion efficiency is deteriorated unless the gel electrolyte is sufficiently introduced into the porous semiconductor. For this reason, it is preferable to impregnate the porous semiconductor with a mixed solution of the liquid electrolyte, the compound A and the compound B and to execute the crosslinking thereafter. In preparing the mixed solution of the liquid electrolyte, the compound A and the compound B, an order of mixing etc. can be suitably selected according to a difference in a reactivity thereof.

For crosslinking, there is principally employed a thermal crosslinking method. A crosslinking condition, variable depending on the kinds and combination of the compound A and the compound B, and on whether a catalyst is present or absent, can be suitably selected in each system, but a crosslinking temperature is preferably within a range from 0 to 90°C.

A catalyst may be employed at the crosslinking. The catalyst usable for this purpose can be an organometallic catalyst or an amine catalyst, usable in producing a polyurethane foam. Specific examples of the organometallic catalyst include stannous octoate, stannous oleate, dibutyl tin dilaurate, and dibutyl tin diacetate, and specific examples of the amine catalyst include triethylamine, tributylamine, N-methylmorpholine, N-ethylmorpholine, pyridine and triethylenediamine.

An amount of addition of the catalyst is usually within a range of 0.001 to 5 wt.% with respect to a total weight of the compound A, the compound B and the electrolyte solution.

A porous semiconductor constituting the porous semiconductor layer can be a known semiconductor such as titanium oxide, zinc oxide, tungsten oxide, barium titanate, strontium titanate or cadmium sulfide. Such porous semiconductor can be employed in a mixture of two or more kinds. Among these, titanium oxide is particularly preferred in consideration of conversion efficiency, stability and safety. Examples of such titanium oxide include various titanium oxides such as anatase-type titanium oxide, lutile-type titanium oxide, amorphous titanium oxide, methatitanic acid or orthotitanic acid, and a titanium oxide-containing composite, and one or more of these materials can be suitably employed.

The porous semiconductor can be employed in various formed such as a granular shape or a film shape, but there is preferred a film-shaped porous semiconductor formed on a substrate.

A preferred substrate in case of forming a film-shaped porous semiconductor can be a glass substrate or a plastic substrate, and a substrate with a high transparency (transparent substrate) is particularly preferred.

For forming a film-shaped porous semiconductor on a substrate, there can be utilized various known methods.

More specifically, there can be employed (a) a method of coating a suspension, containing semiconductor particles, on a substrate followed by drying and sintering, (b) a method of forming, on a substrate, a semiconductor film by CVD or MOCVD utilizing a desired raw material gas, (c) a method of forming a semiconductor film by a PVD process, an evaporation process, a sputtering process or a sol-gel process employing a solid raw material, or (d) a method of film formation by an electrochemical redox reaction.

A film thickness of the porous semiconductor film is not particular limited, but is preferably about 0.5 to 20 µm in consideration of permeability, conversion efficiency etc. Also for improving the conversion efficiency, it is required that a dye to be explained is adsorbed in a larger amount in the film-shaped porous semiconductor. For this reason, it is desired that the film-shaped porous semiconductor has a large specific surface area, preferably about 10 to 200 m²/g.

As the granular semiconductor mentioned in the foregoing, there can be employed particles of a single semiconductor or a compound semiconductor, among those commercially available, having an average particle size for example of 1 to 500 nm. Also a solvent for suspending such semiconductor particles can be a glyme solvent such ethylene glycol monomethyl ether, an alcoholic solvent such as isopropyl alcohol, a mixed solvent such as isopropyl alcohol/toluene, or water.

Drying/sintering of the porous semiconductor is executed under suitably adjusted conditions of temperature, time and atmosphere, according to the type of the substrate and the semiconductor particles to be employed. In an ordinary example, it is executed for a period of 10 seconds to 12 hours in the air or in an inert gas atmosphere, and in a temperature range of about 50 to 800°C. The drying/sintering can be executed once at a single temperature, or more than once with varied temperatures.

A transparent conductive film usable as the electrode is not particularly limited, but there is preferred a transparent conductive film such as ITO (indium-tin oxide) or SnO₂. Such electrode can be formed for example by vacuum evaporation, and a thickness thereof can be suitably selected.

For causing the porous semiconductor layer to adsorb a dye functioning as a photosensitizer (hereinafter simply called "dye"), there can be employed, for example, a method of immersing a porous semiconductor layer, formed on a substrate, in a solution in which a dye is dissolved.

The usable dye includes various dyes having absorption in the visible wavelength region and the infrared wavelength region, and, for a firm adsorption in the semiconductor layer, preferably has an interlocking group such as a carboxyl group, an alkoxy group, a hydroxyl group, a hydroxyalkyl group, a sulfonic acid group, an ester group, a mercapto group or a phosphonyl group.

The interlocking group provides an electrical coupling for facilitating an electron transfer between the dye in an excited state and a conduction band of the semiconductor. Examples of the dye having such interlocking group include a ruthenium bipyridine dye, an azo dye, a quinone dye, a quinonimine dye, a quinacridone dye, a squalirium dye, a cyanine dye, a merocyanine dye, a triphenylmethane dye, a xanthene dye, a porphyrin dye, a phthalocyanine dye, a perylene dye, an indigo dye and naphthalocyanine dye.

Examples of a solvent to be used for dissolving the dye include an alcoholic solvent such as ethanol, a ketone solvent such as acetone, an ether solvent such as diethyl ether or tetrahydrofuran, a nitrogen-containing solvent such as acetonitrile, a halogenated aliphatic hydrocarbon such as chloroform, an aliphatic hydrocarbon such as hexane, an aromatic hydrocarbon such as benzene and an ester such as ethyl acetate.

A concentration of the dye in the solution can be suitably adjusted according to the kinds of the dye and the solvent to be used, but a certain high concentration is preferred for improving the adsorbing function. For example there is preferred a concentration of 5 × 10⁻⁵ mol/L or higher.

At the immersion of the semiconductor in the solution dissolving the dye, a temperature and a pressure of the solution and the atmosphere are not particularly restricted and can be, for example, about a room temperature and an atmospheric pressure, and an immersion time is preferably regulated suitably according to the kinds of the dye and the solvent to be used and the concentration of the solution. For achieving an effective adsorption, the immersion may be executed under heating.

### 2. Second dye-sensitized solar cell

A dye-sensitized solar cell of the invention is a dye-sensitized solar cell including a porous semiconductor layer in which a dye is adsorbed and an electrolyte layer between a transparent conductive film formed on a surface of a transparent substrate and a conductive substrate, featured in that a redox material in the electrolyte layer is retained in a network structure formed by crosslinking a compound A having an isocyanate group and a compound C having a carboxyl group and/or a hydroxyl group.

The above-mentioned compound A having an isocyanate group can be a compound including one or more isocyanate groups within a molecule, and specific examples of the usable compound are same as those explained in the foregoing first invention, and there can also be employed a combination of two or more thereof.

However, as (A5) a prepolymer having one or more isocyanate group, there can be employed one of a molecular weight of 500 to 100,000.

On the other hand, a compound C is a compound having one or more carboxyl group and/or one or more hydroxyl group within a molecule.

Specific examples of the compound having the carboxyl group include a carboxylic acid such as hexanoic acid, adipic acid, phthalic acid and azelaic acid, and specific examples of the compound having the hydroxyl group include an alcohol such as ethylene glycol, diethylene glycol, glycerin, pentaerythritol, sorbitol and glucose.

For the compound C, there can also be employed a compound having a polymer structure with a molecular weight of 500 to 100,000, including one or more carboxyl group and/or one or more hydroxyl group within a molecule.

The polymer structure, either entirely or partially, is preferably formed by polyether, polyester, polycaprolactone, polyhexamethylene carbonate, polysiloxane, polyisoprene, polystyrene, polyvinylpyridine, polyvinyl methyl ether, polyvinyl isobutyl ether, polyacrylamide, polyacrylonitrile, polyvinylidene anide, polyvinyl chloride, polyvinylidene chloride, polyvinyl fluoride, polyvinylidene fluoride, polytetrafluoroethylene, polyvinylpyrrolidone, polyvinylcarbazole, polyethylene terephthalate, nylon, polyamide, polyimide, polycarbonate, polybenzimidazole, polyamine, polyimine, polysulfide, or polyphosphazene.

Among these, there is particularly preferred a structure including polyether, polyester, polycaprolactone, polysiloxane, polyvinylpyrrolidone, polycarbonate or polyphosphazene.

The compound C can be a combination of two or more of the above-mentioned compounds.

A mixing ratio of the compound A and the compound C varies depending on a combination of the compound A and the compound C, and can be suitably determined according also to a crosslinking property of polymer and a performance required for the dye-sensitized solar cell.

A gel electrolyte is constituted of a network structure formed by crosslinking the compound A and the compound C and a liquid electrolyte retained therein. Except for the use of such gel electrolyte, the second dye-sensitized solar cell can be produced with same materials and by a same method as described for the first dye-sensitized solar cell. More specifically, the descriptions on the liquid electrolyte, the redox material, the solvent, the impregnating and crosslinking methods for the gel electrolyte, the catalyst at the crosslinking, the porous semiconductor, the electrode (transparent conductive film), the photosensitizer (dye) etc. for the first dye-sensitized solar cell are also applicable to the second dye-sensitized solar cell.

### 3. Third dye-sensitized solar cell

A third dye-sensitized solar cell of the invention is a dye-sensitized solar cell including a porous semiconductor layer in which a dye is adsorbed and an electrolyte layer between a transparent conductive film formed on a surface of a transparent substrate and a conductive substrate, wherein a redox material is retained by dissolving in a network structure formed by crosslinking a compound A having an isocyanate group and a compound D reactive with the isocyanate group.

The above-mentioned compound A having an isocyanate group can be a compound including one or more isocyanate groups within a molecule, as in the first or second dye-sensitized solar cell. Specifically it can be (A1) an aromatic isocyanate such as tolylene diisocyanate, diphenylmethane diisocyanate, naphthalene diisocyanate or xylylene diisocyanate, (A2) an aliphatic isocyanate such as hexamethylene diisocyanate, or trimethylhexamethylene diisocyanate, or (A3) an alicyclic isocyanate such as isophorone diisocyanate or cyclohexyl diisocyanate, or can be an oligomer such as a dimer or a trimer, or a denatured member of (A1) to (A3).

There can also be employed (A4) an adduct of a lower molecule alcohol and an aromatic isocyanate, an aliphatic isocyanate or an alicyclic isocyanate, or (A5) a prepolymer of a molecular weight of 500 to 20,000 including one or more isocyanate groups and formed in advance by an addition reaction of a compound having a polymer structure and an isocyanate exemplified above.

The compound having a polymer structure is a compound having one or more functional group reactive with isocyanate group, preferably an active hydrogen group.

The polymer structure, either entirely or partially, is preferably formed by polyether, polyester, polycaprolactone, polyhexamethylene carbonate, polysiloxane, polyolefin, polybutadiene, polyisoprene, polystyrene, polyvinylpyridine, polyvinyl methyl ether, polyvinyl isobutyl ether, polyacrylic acid, polymethacrylic acid, polyacrylic acid alkyl ester, polymethacrylic acid alkyl ester, polyacrylamide, polyacrylonitrile, polyvinylidene anide, polyvinyl acetate, polyvinyl alcohol, polyvinyl chloride, polyvinylidene chloride, polyvinyl fluoride, polyvinylidene fluoride, polytetrafluoroethylene, polyvinylpyrrolidone, polyvinylcarbazole, polyethylene terephthalate, nylon, polyamide, polyimide, polycarbonate, polybenzimidazole, polyamine, polyimine, polysulfide, polyphosphazene or a natural polymer.

Among these, there is particularly preferred a structure including polyether, polyester, polycarbonate or polycaprolactone.

Also examples of the active hydrogen group include-OH, -SH, -COOH, -NH, -NH₂, -CONH₂, -NHCONH-, -NHCOO-, Na⁺[CH(COOC₂H₅)], -CH₂NO₂, -OOH, -SiOH, -B(OH)₂, and -PH₃, among which preferred is -OH, -COOH or -NH₂.

The compound A having the isocyanate group can be a combination of two or more of the above-mentioned compounds.

On the other hand, the compound D reactive with the isocyanate group of the compound A is a compound having one or more group reactive with the isocyanate group within a molecule, and is preferably a compound having an active hydrogen group.

The compound having an active hydrogen group is a compound having one or more active hydrogen group within a molecule. Examples of the active hydrogen group include-OH, -SH, -COOH, -NH, -NH₂, -CONH₂, -NHCONH-, -NHCOO-, Na⁺[CH(COOC₂H₅)], -CH₂NO₂, -OOH, -SiOH, -B(OH)₂, and -PH₃, and there is particularly preferred a compound having a carboxyl group, a hydroxyl group or an amino group.

Specific examples of the compound having the carboxyl group include a carboxylic acid such as hexanoic acid, adipic acid, phthalic acid or azelaic acid; specific examples of the compound having the hydroxyl group include an alcohol such as ethylene glycol, diethylene glycol, glycerin, pentaerythritol, sorbitol or glucose; and specific examples of the compound having the amino group include an amine such as ethylene diamine, tolylene diamine, diphenylmethane diamine, or diethylene triamine. Also examples of a compound having different active hydrogen groups within a molecule include an amino acid such as glycine or alanine, ethanol amine and succinamide acid.

Also as the compound D reactive with the compound A, there can also be employed a compound having a polymer structure of a molecular weight of 500 to 20,000, including one or more aforementioned groups reactive with the isocyanate group within a molecule.

The polymer structure, either entirely or partially, is preferably formed by polyether, polyester, polycaprolactone, polyhexamethylene carbonate, polysiloxane, polyolefin, polybutadiene, polyisoprene, polystyrene, polyvinylpyridine, polyvinyl methyl ether, polyvinyl isobutyl ether, polyacrylic acid, polymethacrylic acid, polyacrylic acid alkyl ester, polymethacrylic acid alkyl ester, polyacrylamide, polyacrylonitrile, polyvinylidene anide, polyvinyl acetate, polyvinyl alcohol, polyvinyl chloride, polyvinylidene chloride, polyvinyl fluoride, polyvinylidene fluoride, polytetrafluoroethylene, polyvinylpyrrolidone, polyvinylcarbazole, polyethylene terephthalate, nylon, polyamide, polyimide, polycarbonate, polybenzimidazole, polyamine, polyimine, polysulfide, polyphosphazene or a natural polymer.

Among these, there is particularly preferred a structure including polyether, polyester, polycarbonate or polycaprolactone.

The compound D reactive with the isocyanate group can also be a combination of two or more of the above-mentioned compounds.

A mixing ratio of the compound A and the compound D varies depending on a combination of the compound A and the compound D, and can be suitably determined according also to a crosslinking property of polymer and a performance required for the dye-sensitized solar cell.

A polymer solid electrolyte is constituted of a polymer compound principally obtained from the compound A and the compound D, and a redox material dissolved therein.

The redox material is not particularly limited as long as it is generally usable in a battery or a solar cell, and can specifically be those described for the foregoing first invention. The redox material is preferably used in an amount within a range from 0.5 to 30 wt.% with respect to the total weight of the compound A and the compound D.

In a solar cell, as described in the foregoing, the conversion efficiency is deteriorated unless the electrolyte is sufficiently introduced into the porous semiconductor. In the invention, it is rendered possible to sufficiently introduce the electrolyte into the porous semiconductor by impregnating the porous semiconductor with a mixed solution of the compound A, the compound D and the redox material and to execute the crosslinking thereafter. In this operation, the redox material is dissolved in advance in the compound A and/or the compound D. A method of mixing, for example an order of mixing, of the mixed solution of the compound A and the compound D in which the redox material is dissolved in either or both thereof, can be suitably selected for example according to a difference in the reactivity thereof.

For dissolving the redox material in the compound A and/or the compound D, there can be suitably selected, for example, a method of dissolving the compound A or the compound D and an iodide in a common solvent, then eliminating the common solvent, and adding iodine to achieve dissolution, a method of dissolving an iodide in a common solvent, then adding iodine, further adding and dissolving the compound A or the compound D and eliminating the common solvent, or a method of dissolving an iodide directly in the compound A or the compound D and then dissolving iodine. However such methods are not restrictive.

For crosslinking, there can be employed a method same as that described for the first dye-sensitized solar cell. In such operation, an amount of addition of a catalyst is usually within a range of 0.001 to 10 wt.% with respect to a total weight of the compound A, the compound D and the redox material.

Except for the aforementioned points, the third dye-sensitized solar cell can be produced with same materials and by a same method as described for the first dye-sensitized solar cell. More specifically, the descriptions on the porous semiconductor, the electrode (transparent conductive film), the photosensitizer (dye) etc. for the first dye-sensitized solar cell are also applicable to the third dye-sensitized solar cell.

### 4. Examples

In the following, there will be described examples of the present invention, but the present invention is not limited to such examples.

### (1) Examples on first dye-sensitized solar cell

### [Example 1-1]

A dye-sensitized solar cell utilizing a polymer solid electrolyte was prepared in a following method, and a conversion efficiency thereof was evaluated.

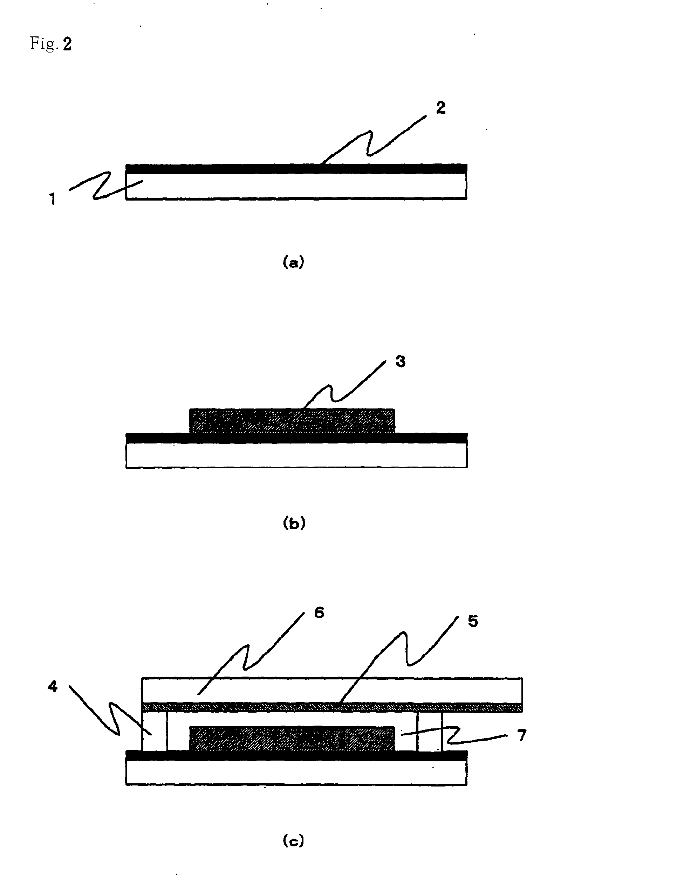

A preparation process for the dye-sensitized solar cell will be explained with reference to Fig. 2. In Fig. 2, (a) to (c) are schematic cross-sectional views of a dye-sensitized solar cell, following preparation steps thereof. In Fig. 2, there are shown a transparent substrate 1, a transparent conductive film 2, a titanium oxide film 3, a separator 4, a platinum film 5, a conductive substrate 6, and a gel electrolyte layer 7.

On a transparent substrate 1 formed by a glass, a transparent conductive film 2 of SnO₂ was formed by vacuum evaporation, and a titanium oxide film 3 was formed on the transparent conductive film 2 by a following method.

As a titanium oxide suspension for forming the titanium oxide film 3, there was employed a commercially available titanium oxide suspension (manufactured by Solaronix Inc., trade name: Ti-Nanoxide D). This titanium oxide suspension was coated by a doctor blade method with a thickness of about 10 µm and an area of about 10 mm × 10 mm, on a side of the transparent conductive film 2, then was preliminarily dried for 30 minutes at 80°C and sintered for 40 minutes in the air at 500°C. As a result, there was obtained a titanium oxide film 3 of a thickness of 7 µm.

Then a ruthenium dye (manufactured by Kojima Kagaku Co., trade name: Ruthenium Complex) was dissolved in anhydrous ethanol with a concentration of 4 × 10⁻⁴ mol/L to obtain a dye solution for adsorption. The dye solution for adsorption and the transparent substrate 1 provided with the titanium oxide film 3 and the transparent conductive film 2, obtained as described above, were placed in a container, and were boiled for 1 minutes and then let to stand for 10 minutes whereby the dye was adsorbed in the titanium oxide film 3. Thereafter it was rinsed several times with anhydrous ethanol and was dried for about 20 minutes at about 60°C.

Then there was prepared a liquid electrolyte to be retained in the gel. In propylene carbonate (hereinafter represented as PC) as a solvent, there were dissolved lithium iodide at a concentration of 0.5 mol/L and iodine at a concentration of 0.05 mol/L to obtain a liquid electrolyte.

A monomer solution was prepared with 13.20 g of a compound A synthesized by a following synthesis method 1-1, 1 g of diethyltoluene diamine as a compound B, and 127.8 g of the above-described liquid electrolyte.

### (Synthesis method 1-1)

In 100 parts by weight of polytetramethylene glycol (manufactured by Mitsubishi Chemical Corporation, trade name: PTMG2000) placed in a reaction vessel, 18 parts by weight of tolylene diisocyanate and 0.05 parts by weight of dibutyl tin dilaurate as a catalyst were added and reacted at 80°C to obtain a compound with a molecular weight of 2350.

The monomer solution thus obtained was impregnated in the titanium oxide film 3 in the following manner.

(i) The titanium oxide film 3 formed on the transparent substrate 1 bearing the transparent conductive film 2 was set in a container such as a Petri dish placed in a vacuum vessel, and the interior thereof was evacuated for about 10 minutes with a rotary pump; (ii) While the interior of the vacuum vessel was maintained in a vacuum state, the monomer solution was poured into the Petri dish to execute immersion for about 10 minutes whereby the monomer solution was sufficiently impregnated in the titanium oxide film 3; (iii) A polyimide separator 4 and a conductive substrate 6 bearing a platinum film 5 were placed and fixed with a fixation tool as shown in Fig. 2 (c). Then thermal polymerization was executed by heating at about 90°C for 60 minutes to obtain a gel electrolyte layer 7.

It was confirmed that the dye-sensitized solar cell, prepared by the above-described method and including the gel electrolyte layer 7, had a conversion efficiency comparable to that in a solar cell including a liquid electrolyte. More specifically, there was obtained a dye-sensitized solar cell with a shortcircuit current of 13.9 [mA/cm²], an open terminal voltage of 0.71 [V], a fill factor of 0.67, and a conversion efficiency of 6.6 [%] (measured under AM-1.5 (100mW/cm²)).

In following examples 1-2 to 1-16, dye-sensitized solar cells were prepared with the gel electrolyte layer 7 formed by respectively changing the compound A and the compound B and with other steps and materials same as those in the example 1-1. The conversion efficiency was measured on each of these dye-sensitized solar cells. Obtained results are shown in Table 1. For compounds synthesized by the present inventors, there are also shown synthetic methods thereof.

### [Example 1-2]

There were employed 1.3 g of trimethylolpropane-denatured tolylene diisocyanate (manufactured by Nippon Polyurethane Industry Co., trade name: Coronate L) as the compound A, 10 g of polyetheramine (manufactured by Huntsman Corp., trade name: Jeffamine T-5000) as the compound B, and 101.7 g of the liquid electrolyte.

### [Example 1-3]

There were employed 4.2 g of a compound obtained by a following synthesis method 1-2 as the compound A, 2 g of polyetheramine (manufactured by Huntsman Corp., trade name: Jeffamine T-5000) as the compound B, and 200 g of the liquid electrolyte.

### (Synthesis method 1-2)

In a reaction vessel, there were charged 92 g of glycerin as a starting material and 30 g of potassium hydroxide as a catalyst. There were also charged 5,950 g of ethylene oxide and 3,970 g of propylene oxide, and after a reaction for 10 hours at 130°C, a neutralization-dehydration process was executed to obtain an ethylene oxide-propylene oxide copolymer of a molecular weight of 10,000. To 100 g of the obtained compound, 5.3 g of tolylene diisocyanate and 0.05 g of dibutyl tin dilaurate as a catalyst were added and reacted for 3 hours at 80°C to obtain a compound of a molecular weight of 10,520.

### [Example 1-4]

There were employed 0.87 g of tolylene diisocyanate as the compound A, 10 g of polyetheramine (manufactured by Huntsman Corp., trade name: Jeffamine T-5000) as the compound B, and 97.8 g of the liquid electrolyte.

### [Example 1-5]

There were employed 45.8 g of a compound obtained by a following synthesis method 1-3 as the compound A, 1 g of dimethylthiotoluenediamine as the compound B, and 420 g of the liquid electrolyte.

### (Synthesis method 1-3)

In a reaction vessel, there were charged 166 g of diglycerin as a starting material and 30 g of potassium hydroxide as a catalyst. There were also charged 11,270 g of ethylene oxide and 7,490 g of butylene oxide, and after a reaction for 10 hours at 130°C, a neutralization-dehydration process was executed to obtain a tetrafunctional ethylene oxide-butylene oxide copolymer of a molecular weight of 18,920. To 100 g of the obtained compound, 3.7 g of tolylene diisocyanate and 0.05 g of dibutyl tin dilaurate as a catalyst were added and reacted at 80°C to obtain a compound of a molecular weight of 19,620.

### [Example 1-6]

There were employed 0.67 g of isophorone diisocyanate as the compound A, 10 g of polyetheramine (manufactured by Huntsman Corp., trade name: Jeffamine T-5000) as the compound B and 60.5 g of the liquid electrolyte.

### [Example 1-7]

There were employed 41.5 g of a compound obtained by a following synthesis method 1-4 as the compound A, 10 g of polyetheramine (manufactured by Huntsman Corp., trade name: Jeffamine D-2000) as the compound B, 464 g of the liquid electrolyte, and 0.005 g of triethylenediamine as the catalyst.

### (Synthesis method 1-4)

In a reaction vessel, there were charged 62 g of ethylene glycol as a starting material and 30 g of potassium hydroxide as a catalyst. There were also charged 6,340 g of ethylene oxide and 1,570 g of propylene oxide, and after a reaction for 10 hours at 130°C, a neutralization-dehydration process was executed to obtain a bifunctional ethylene oxide-propylene oxide copolymer of a molecular weight of 7,960. To 100 g of the obtained compound, 4.2 g of hexamethylene diisocyanate and 0.1 g of dibutyl tin dilaurate as a catalyst were added together with 100 g of methyl ethyl ketone as a diluting solvent, and, after a reaction at 80°C, methyl ethyl ketone was eliminated to obtain a compound of a molecular weight of 8,300.

### [Example 1-8]

There were employed 9.5 g of a compound obtained by the foregoing synthesis method 1-2 and 2.5 g of a compound obtained by a following synthesis method 1-5 as the compounds A, 1 g of polyetheramine (manufactured by Huntsman Corp., trade name: Jeffamine D-230) as the compound B, and 116.3 g of the liquid electrolyte.

### (Synthesis method 1-5)

In a reaction vessel, 53.4 g of polyester polyol (manufactured by Toho Rika Co., trade name: Fantol PL-2010) and 34.8 g of tolylene diisocyanate were mixed and, with an addition of 0.05 g of dibutyl tin dilaurate as a catalyst, reacted at 80°C to obtain a compound.

### [Example 1-9]

There were employed 3.2 g of a compound obtained by the foregoing synthesis method 1-2 and 1.7 g of a compound obtained by a following synthesis method 1-6 as the compounds A, 1 g of polyetheramine (manufactured by Huntsman Corp., trade name: Jeffamine D-400) as the compound B, 23.6 g of the liquid electrolyte, and 0.01 g of triethylene diamine as a catalyst.

### (Synthesis method 1-6)

In a reaction vessel, 50 g of polycaprolactonediol (manufactured by Daicel Chemical Industries Ltd., trade name: Praxel L205AL) and 34.8 g of tolylene diisocyanate were mixed and, with an addition of 0.05 g of dibutyl tin dilaurate as a catalyst, reacted at 80°C to obtain a compound.

### [Example 1-10]

There were employed 1.1 g of a compound obtained by the foregoing synthesis method 1-2 and 14 g of a compound obtained by a following synthesis method 1-7 as the compounds A, 1 g of ethylenediamine as the compound B, and 145 g of the liquid electrolyte.

### (Synthesis method 1-7)

In a reaction vessel, 50 g of polycaprolactonediol (manufactured by Daicel Chemical Industries Ltd., trade name: Praxel CD205PL) and 34.8 g of tolylene diisocyanate were mixed and, with an addition of 0.05 g of dibutyl tin dilaurate as a catalyst, reacted at 70°C to obtain a compound.

### [Example 1-11]

There were employed 15.8 g of polybutadiene prepolymer (manufactured by Idemitsu Atochem Co., trade name: Poly bd HTP-9) as the compound A, 10 g of polyetheramine (manufactured by Huntsman Corp., trade name: Jeffamine T-3000) as the compound B and 146 g of the liquid electrolyte.

### [Example 1-12]

There were employed 5 g of a compound obtained by a following synthesis method 1-8 as the compound A, 10 g of polyetheramine (manufactured by Huntsman Corp., trade name: Jeffamine D-200) as the compound B, and 135 g of the liquid electrolyte.

### (Synthesis method 1-8)

In a reaction vessel, 50 g of polyolefin polyol (manufactured by Toa Gosei Co., trade name: Carbodiol D-1000) and 18 g of tolylene diisocyanate were dissolved in methyl ethyl ketone and, with an addition of 0.04 g of dibutyl tin dilaurate as a catalyst, reacted at 60°C, and methyl ethyl ketone was eliminated to obtain a compound.

### [Example 1-13]

There were employed 91.2 g of a compound obtained by the foregoing synthesis method 1-2 as the compound A, 8 g of silicone amine (manufactured by Chisso Co., trade name: FM-3311) and 2 g of polyetheramine (manufactured by Huntsman Corp., trade name: Jeffamine D-400) as the compounds B, and 911 g of the liquid electrolyte.

### [Example 1-14]

There were employed 2.5 g of a compound obtained by a following synthesis method 1-9 as the compound A, 1 g of polyetheramine (manufactured by Huntsman Corp., trade name: Jeffamine D-2000) as the compounds B, 31.5 g of the liquid electrolyte, and 0.005 g of triethylene diamine as a catalyst.

### (Synthesis method 1-9)

Polydichlorophosphazene obtained by a ring-opening polymerization of 3,480 g of hexachlorocyclotriphosphazene, a sodium salt of 120 g of polyethylene glycol of a molecular weight of 200 and a sodium salt of 1080 g of methoxypolyethylene glycol were subjected to a condensation reaction to obtain polyphosphazene polyol of a molecular weight of 13,350. To 100 g of the obtained compound, 0.8 g of tolylene diisocyanate, 0.1 g of dibutyl tin dilaurate as a catalyst and 100 g of methyl ethyl ketone as a diluting solvent were added and reacted at 80°C, and methyl ethyl ketone was eliminated to obtain a compound of a molecular weight of 13,450.

### [Example 1-15]

There were employed 96 g of a compound obtained by a following synthesis method 1-10 as the compound A, 1 g of diethyltoluene diamine as the compounds B, 874 g of the liquid electrolyte, and 0.01 g of stannous oleate as a catalyst.

### (Synthesis method 1-10)

In a reaction vessel, there were charged 182 g of sorbitol as a starting material and 30 g of potassium hydroxide as a catalyst. There were also charged 38,720 g of ethylene oxide and 9,860 g of propylene oxide, and after a reaction for 10 hours at 130°C, a neutralization-dehydration process was executed to obtain a hexafunctional ethylene oxide-propylene oxide copolymer of a molecular weight of 48,560. To 100 g of the obtained compound, 2.1 g of tolylene diisocyanate and 0.1 g of dibutyl tin dilaurate as a catalyst were added together with 100 g of methyl ethyl ketone as a diluting solvent, and, after a reaction at 80°C, methyl ethyl ketone was eliminated to obtain a compound of a molecular weight of 49,620.

### [Example 1-16]

There were employed 14.2 g of a compound obtained by a following synthesis method 1-11 as the compound A, 10 g of polyetheramine (manufactured by Huntsman Corp., trade name: Jeffamine T-3000) as the compound B, and 218 g of the liquid electrolyte.

### (Synthesis method 1-11)

In a reaction vessel, 250 g of polyisoprene polyol (manufactured by Idemitsu Atochem Co., trade name: Poly ip) and 35 g of tolylene diisocyanate were dissolved in 500 g of methyl ethyl ketone and, with an addition of 0.05 g of dibutyl tin dilaurate as a catalyst, reacted at 60°C, and methyl ethyl ketone was eliminated to obtain a compound.

**Table 1**

| | Conversion efficiency (%) |
|---|---|
| Example 1-1 | 6.6 |
| Example 1-2 | 7.2 |
| Example 1-3 | 8.3 |
| Example 1-4 | 7.0 |
| Example 1-5 | 7.1 |
| Example 1-6 | 6.0 |
| Example 1-7 | 7.8 |
| Example 1-8 | 7.0 |
| Example 1-9 | 5.6 |
| Example 1-10 | 8.0 |
| Example 1-11 | 6.2 |
| Example 1-12 | 7.4 |
| Example 1-13 | 7.7 |
| Example 1-14 | 7.4 |
| Example 1-15 | 7.1 |
| Example 1-16 | 7.0 |

As shown in Table 1, changes in the compound A and the compound B resulted in differences in the conversion efficiency of the dye-sensitized solar cell. In general, a longer molecular chain provided a higher conversion efficiency. It is estimated that a longer molecular chain resulted in a larger network of the polymer compound and increased a retaining power for the redox liquid electrolyte, thereby increasing the conversion efficiency.

### (2) Examples on second dye-sensitized solar cell

### [Example 2-1]

A dye-sensitized solar cell having a gel electrolyte layer 7 was prepared, employing 11.3 g of a compound synthesized by a following synthesis method 2-1 as the compound A, 1 g of polyester polyol (manufactured by Toho Rika Co., trade name: Fantol PL-180), 110.7 g of the liquid electrolyte, and 0.002 g of triethylamine as a catalyst, and utilizing a method same as that of the foregoing examples of the first dye-sensitized solar cell, and a conversion efficiency thereof was evaluated.

### (Synthesis method 2-1)

In a reaction vessel, there were charged 92 g of glycerin as a starting material and 30 g of potassium hydroxide as a catalyst. There were also charged 5,950 g of ethylene oxide and 3,970 g of propylene oxide, and after a reaction for 10 hours at 130°C, a neutralization-dehydration process was executed to obtain a trifunctional ethylene oxide-propylene oxide copolymer of a molecular weight of 10,000. To 100 g of the obtained compound, 5.3 g of tolylene diisocyanate and 0.05 g of dibutyl tin dilaurate as a catalyst were added, and reacted for 3 hours at 80°C to obtain a compound of a molecular weight of 10,520.

It was confirmed that the dye-sensitized solar cell of the present example had a conversion efficiency comparable to that in a solar cell utilizing a liquid electrolyte. More specifically, there was obtained a dye-sensitized solar cell with a shortcircuit current of 14.7 [mA/cm²], an open terminal voltage of 0.70 [V], a fill factor of 0.68, and a conversion efficiency of 7.0 [%] (measured under AM-1.5 (100mW/cm²)).

In following examples 2-2 to 2-11, dye-sensitized solar cells were prepared with the gel electrolyte layer 7 formed by respectively changing the compound A and the compound C and with other steps and materials same as those in the example 2-1. The conversion efficiency was measured on each of these dye-sensitized solar cells. Obtained results are shown in Table 2. For compounds synthesized by the present inventors, there are also shown synthetic methods thereof.

### [Example 2-2]

There were employed 0.35 g of tolylene diisocyanate as the compound A, 5 g of a compound synthesized by a following synthesis method 2-2 and 5 g of a compound synthesized by a following synthesis method 2-3 as the compounds C, 93.15 g of the liquid electrolyte and 0.01 g of stannous octoate as a catalyst.

### (Synthesis method 2-2)

In a reaction vessel, 92 g of glycerin as a starting material were employed to execute an addition reaction of 1,910 g of propylene oxide to obtain a trifunctional propylene oxide polymer of a molecular weight of 2,000.

### (Synthesis method 2-3)

In a reaction vessel, 62 g of ethylene glycol were employed as a starting material to execute an addition reaction of 6,960 g of ethylene oxide and 2,990 g of propylene oxide to obtain a difunctional ethylene oxide-propylene oxide copolymer of a molecular weight of 10,000.

### [Example 2-3]

There were employed 8 g of tolylene diisocyanate as the compound A, 9 g of a compound synthesized by a following synthesis method 2-4 and 1 g of a compound synthesized by a following synthesis method 2-5 as the compounds C, 72 g of the liquid electrolyte and 0.01 g of triethylene diamine as a catalyst.

### (Synthesis method 2-4)

In a reaction vessel, 62 parts by weight of ethylene glycol as a starting material were employed to execute an addition reaction of 138 parts by weight of ethylene oxide to obtain polyethylene glycol of a molecular weight of 200.

### (Synthesis method 2-5)

In a reaction vessel, 60 g of vinylpyrrolidone and 138 g of water were mixed, then subjected to a polymerization at 25°C with an addition of 0.003 g of 1 wt.% copper sulfate, 0.3 g of 28 wt.% ammonia and 1.4 g of 30 wt.% hydrogen peroxide and dehydrated to obtain polyvinylpyrrolidone of a K value of 30.

### [Example 2-4]

There were employed 0.03 g of isophorone diisocyanate as the compound A, 10 g of a compound synthesized by a following synthesis method 2-6 as the compound C, 90.3 g of the liquid electrolyte, and 0.01 g of dibutyl tin dilaurate as a catalyst.

### (Synthesis method 2-6)

Polydichlorophosphazene obtained by a ring-opening polymerization of 250 parts by weight of hexachlorocyclotriphosphazene, and a sodium salt of 860 parts by weight of polyethylene glycol of a molecular weight of 230 were subjected to a condensation polymerization to obtain polyphosphazene polyol of a molecular weight of 95,000.

### [Example 2-5]

There were employed 2 g of tolylene diisocyanate as the compound A, 10 g of silicone (manufactured by Chisso Co., trade name: denatured silicone oil FM-4411) as the compounds C, 68 g of the liquid electrolyte, and 0.01 g of triethylene diamine as a catalyst.

### [Example 2-6]

There were employed 6 g of a compound synthesized by a following synthesis method 2-7 as the compounds A, 5 g of polyether-denatured polycarbonatediol (manufactured by Daicel Chemical Industries Ltd., trade name: Praxel CD221), 99 g of the liquid electrolyte, and 0.005 g of triethylene diamine as a catalyst.

### (Synthesis method 2-7)

In 100 parts by weight of polytetramethylene glycol (manufactured by Mitsubishi Chemical Corporation, trade name: PTMG2000) placed in a reaction vessel, 18 parts by weight of tolylene diisocyanate and 0.05 parts by weight of dibutyl tin dilaurate as a catalyst were added and reacted at 80°C to obtain a compound with a molecular weight of 2,350.

### [Example 2-7]

There were employed 0.6 g of isophorone diisocyanate as the compound A, 10 g of polycaprolactone (manufactured by Daicel Chemical Industries Ltd., trade name: Praxel L230AL) as the compound C, 95.4 g of the liquid electrolyte, and 0.01 g of stannous oleate as a catalyst.

### [Example 2-8]

There were employed 36.8 g of a compound obtained by a following synthesis method 2-8 as the compound A, 0.5 g of a compound synthesized by the foregoing synthesis method 2-2 as the compound C, 336 g of the liquid electrolyte, and 0.005 g of triethylene diamine as a catalyst.

### (Synthesis method 2-8)

In a reaction vessel, 62 parts by weight of ethylene glycol were employed as a starting material to execute an addition reaction of 78,000 parts by weight of ethylene oxide and 19,600 parts by weight of propylene oxide to obtain a bifunctional ethylene oxide-propylene oxide copolymer of a molecular weight of 97,700. To 100 parts by weight of the obtained compound, 0.4 parts by weight of hexamethylene diisocyanate, 0.1 parts by weight of dibutyl tin dilaurate as a catalyst and 100 parts by weight of methyl ethyl ketone as a diluting solvent were added, and, after a reaction at 80°C, methyl ethyl ketone was eliminated to obtain a compound of a molecular weight of 98, 000.

### [Example 2-9]

There were employed 13.6 g of a compound obtained by a following synthesis method 2-9 as the compound A, 0.3 g of polyethylene glycol of a molecular weight of 200 and 0.7 g of a compound obtained by a following synthesis method 2-10 as the compounds C, 131 g of the liquid electrolyte, and 0.1 g of triethylene diamine as a catalyst.

### (Synthesis method 2-9)

In a reaction vessel, there were charged 62 g of ethylene glycol as a starting material and 30 g of potassium hydroxide as a catalyst. There were also charged 6,340 g of ethylene oxide and 1,570 g of propylene oxide, and after a reaction for 10 hours at 130°C, a neutralization-dehydration process was executed to obtain a bifunctional ethylene oxide-propylene oxide copolymer of a molecular weight of 7,960. To 100 g of the obtained compound, 4.2 g of hexamethylene diisocyanate, 0.1 g of dibutyl tin dilaurate as a catalyst and 100 g of methyl ethyl ketone as a diluting solvent were added, and, after a reaction at 80°C, methyl ethyl ketone was eliminated to obtain a compound of a molecular weight of 8,300.

### (Synthesis method 2-10)

In a reaction vessel, there were charged 92 g of glycerin as a starting material and 24 g of potassium hydroxide as a catalyst. There were also charged 6,340 g of ethylene oxide and 1,590 g of propylene oxide, and after a reaction for 8 hours at 130°C, a neutralization-dehydration process was executed to obtain a trifunctional ethylene oxide-propylene oxide copolymer of a molecular weight of 8,000. 100 g of the obtained compound were reacted with 4.1 g of methyl chloroacetate at 60°C in the presence of an alkaline catalyst, followed by an alcoholation and a sulfuric acid treatment to obtain 90 g of carboxyl group-denatured polyether of a molecular weight of 8,140.

### [Example 2-10]

There were employed 1.6 g of a compound obtained by a following synthesis method 2-11 as the compound A, 10 g of a compound obtained by a following synthesis method 2-12 as the compound C, 104 g of the liquid electrolyte, and 0.01 g of stannous octoate as a catalyst.

### (Synthesis method 2-11)

In a reaction vessel, 53.4 g of polyesterpolyol (manufactured by Toho Rika Co., trade name: Fantol PL-2010) and 34.8 g of tolylene diisocyanate were mixed and, with an addition of 0.05 g of dibutyl tin dilaurate as a catalyst, reacted at 80°C to obtain a compound.

### (Synthesis method 2-12)

In a reaction vessel, there were charged 106 g of diethylene glycol as a starting material and 24 g of potassium hydroxide as a catalyst. There were also charged 2,940 g of ethylene oxide and 1,980 g of propylene oxide, and after a reaction for 8 hours at 130°C, a neutralization-dehydration process was executed to obtain a bifunctional ethylene oxide-propylene oxide copolymer of a molecular weight of 4,980. 100 g of the obtained compound were reacted with 4.5 g of methyl chloroacetate at 60°C in the presence of an alkaline catalyst, followed by an alcoholation and a sulfuric acid treatment to obtain 90 g of carboxyl group-denatured polyether of a molecular weight of 5,000.

### [Example 2-11]

There were employed 2 g of a compound obtained by the foregoing synthesis method 2-11 as the compound A, 10 g of carboxyl group-denatured polysiloxane as the compound C, 108 g of the liquid electrolyte, and 0.01 g of stannous octoate as a catalyst.

**Table 2**

| | Conversion efficiency (%) |
|---|---|
| Example 2-1 | 7.1 |
| Example 2-2 | 7.0 |
| Example 2-3 | 5.6 |
| Example 2-4 | 8.0 |
| Example 2-5 | 6.2 |
| Example 2-6 | 7.4 |
| Example 2-7 | 7.1 |
| Example 2-8 | 8.3 |
| Example 2-9 | 7.6 |
| Example 2-10 | 7.3 |
| Example 2-11 | 7.0 |

As shown in Table 2, changes in the compound A and the compound C resulted in differences in the conversion efficiency of the dye-sensitized solar cell. In general, a longer molecular chain provided a higher conversion efficiency. It is estimated that a longer molecular chain resulted in a larger network of the polymer compound and increased a retaining power for the redox liquid electrolyte, thereby increasing the conversion efficiency.

### (3) Examples on third dye-sensitized solar cell

### [Example 3-1]

A dye-sensitized solar cell utilizing a polymer solid electrolyte was prepared in a following method, and a conversion efficiency thereof was evaluated.

A preparation process for the dye-sensitized solar cell is basically same as that shown in the examples of the first dye-sensitized solar cell and the second dye-sensitized solar cell. However, in Fig. 2, a numeral 7 indicates a polymer solid electrolyte layer. The polymer solid electrolyte 7 was prepared in the following manner.

0.26 g of tolylene diisocyanate as the compound A, 10 g of a compound obtained by a following synthesis method 3-1 as the compound D and 10 g of acetonitrile as a diluting solvent were mixed. Then there were dissolved lithium iodide at a concentration of 0.5 mol/L and iodine at a concentration of 0.05 mol/L, and, after acetonitrile was distilled off under a reduced pressure, 0.01 g of triethylene diamine as a catalyst were added and dissolved to obtain a precursor of a polymer solid electrolyte.

### (Synthesis method 3-1)

In a reaction vessel, 182 g of sorbitol as a starting material, 11,900 g of ethylene oxide and 7,780 g of butylene oxide were charged, and were reacted with 30 g of potassium hydroxide as a catalyst for 10 hours at 130°C, followed by a neutralization-dehydration process, to obtain 20 kg of a tetrafunctional ethylene oxide-butylene oxide copolymer of a molecular weight of 19,840.

The polymer solid electrolyte precursor thus obtained was impregnated in the titanium oxide film 3 in the following manner to form a polymer solid electrolyte layer 7.

(i) The titanium oxide film 3 formed on the transparent substrate 1 bearing the transparent conductive film 2 was set in a container such as a Petri dish placed in a vacuum vessel, and the interior thereof was evacuated for about 10 minutes with a rotary pump; (ii) While the interior of the vacuum vessel was maintained in a vacuum state, the polymer solid electrolyte precursor was poured into the Petri dish to execute immersion for about 10 minutes whereby the polymer solid electrolyte precursor was sufficiently impregnated in the titanium oxide film 3; (iii) A polyimide separator 4 and a conductive substrate 6 bearing a platinum film 5 were placed and fixed with a fixation tool as shown in Fig. 2 (c). Then thermal crosslinking was executed by heating at about 90°C for 60 minutes to obtain a polymer solid electrolyte layer 7.

The dye-sensitized solar cell, prepared by the above-described method and including the polymer solid electrolyte layer 7, showed a conversion efficiency of 2.4 % when irradiated with a light of an intensity of 100 mW/cm² with a solar simulator, and the usefulness as a solar cell was thus confirmed.

In following examples 3-2 to 3-12, dye-sensitized solar cells were prepared with the polymer solid electrolyte layer 7 formed by respectively changing the compound A and the compound D and with other steps and materials same as those in the example 3-1. The conversion efficiency was measured on each of these dye-sensitized solar cells, and obtained results are shown in Table 3. For compounds synthesized by the present inventors, there are also shown synthetic methods thereof.

### [Example 3-2]

There were employed 11.8 g of a compound obtained by a following synthesis method 2 as the compound A, and 10 g of polyetheramine (manufactured by Huntsman Corp., trade name: Jeffamine D-2000) as the compound D.

### (Synthesis method 3-2)

In a reaction vessel, 100 g of polytetramethylene glycol (manufactured by Mitsubishi Chemical Corporation, trade name: PTMG2000) and 18 g of tolylene diisocyanate were charged and reacted for 3 hours at 80°C with an addition of 0.05 g of dibutyl tin dilaurate as a catalyst to obtain a compound with a molecular weight of 2,350.

### [Example 3-3]

There were employed 1.26 g of trimethylolpropane-denatured tolylene diisocyanate, obtained by eliminating a diluting solvent from Coronate-L manufactured by Nippon Polyurethane Industry Co., as the compound A, and 10 g of polyetheramine (manufactured by Huntsman Corp., trade name: Jeffamine T-5000) as the compound D.

### [Example 3-4]

There were employed 21 g of a compound obtained by a following synthesis method 3-3 as the compound A, and 10 g of polyetheramine (manufactured by Huntsman Corp., trade name: Jeffamine T-5000) as the compound D.

### (Synthesis method 3-3)

In a reaction vessel, there were charged 92 g of glycerin as a starting material and 30 g of potassium hydroxide as a catalyst. There were also charged 5,950 g of ethylene oxide and 3,970 g of propylene oxide, and after a reaction for 10 hours at 130°C, a neutralization-dehydration process was executed to obtain a trifunctional ethylene oxide-propylene oxide copolymer of a molecular weight of 10,000. To 100 g of the obtained compound, 5.3 g of tolylene diisocyanate and 0.05 g of dibutyl tin dilaurate as a catalyst were added and reacted for 3 hours at 80°C to obtain a compound of a molecular weight of 10,520.

### [Example 3-5]

There were employed 35.6 g of a compound obtained by a following synthesis method 3-4 as the compound A, 0.5 g of polyester polyol (manufactured by Toho Rika Co., trade name: Fantol PL180) and 0.5 g of diethyltoluene diamine as the compounds D, and 0.001 g of dibutyl tin dilaurate as a catalyst.

### (Synthesis method 3-4)

In a reaction vessel, there were charged 166 g of diglycerin as a starting material and 30 g of potassium hydroxide as a catalyst. There were also charged 11,270 g of ethylene oxide and 7,490 g of butylene oxide, and after a reaction for 10 hours at 130°C, a neutralization-dehydration process was executed to obtain a tetrafunctional ethylene oxide-butylene oxide copolymer of a molecular weight of 18,920. To 100 g of the obtained compound, 3.7 g of tolylene diisocyanate and 0.05 g of dibutyl tin dilaurate as a catalyst were added and reacted at 80°C to obtain a compound of a molecular weight of 19,620.

### [Example 3-6]

There were employed 0.34 g of isophorone diisocyanate as the compound A, 10 g of a compound obtained by a following synthesis method 3-5 as the compound D and 0.01 g of N,N,N',N'-tetramethylpropylene diamine as a catalyst.

### (Synthesis method 3-5)

In a reaction vessel, 136 g of pentaerythritol as a starting material, 9,510 g of ethylene oxide and 2,350 g of propylene oxide were charged and were reacted with 30 g of potassium hydroxide as a catalyst for 8 hours at 130°C, followed by neutralization-dehydration process, to obtain 12 kg of a tetrafunctional ethylene oxide-propylene oxide copolymer. The molecular weight thereof was 11,960.

### [Example 3-7]

There were employed 13.6 g of a compound obtained by a following synthesis method 3-6 as the compound A, 0.3 g of polyethylene glycol with a molecular weight of 200 and 0.7 g of a compound obtained by a following synthesis method 3-7 as the compounds D, and 0.005 g of triethylene diamine as a catalyst.

### (Synthesis method 3-6)

In a reaction vessel, there were charged 62 g of ethyleneglycol as a starting material and 30 g of potassium hydroxide as a catalyst. There were also charged 6,340 g of ethylene oxide and 1,570 g of propylene oxide, and after a reaction for 10 hours at 130°C, a neutralization-dehydration process was executed to obtain a bifunctional ethylene oxide-propylene oxide copolymer of a molecular weight of 7,960. To 100 g of the obtained compound, 4.2 g of hexamethylene diisocyanate, 0.1 g of dibutyl tin dilaurate as a catalyst and 100 g of methyl ethyl ketone as a diluting solvent were added and reacted at 80°C. After the reaction, methyl ethyl ketone was removed to obtain a compound with a molecular weight of 8,300.

### (Synthesis method 3-7)

In a reaction vessel, there were charged 92 g of glycerin as a starting material and 24 g of potassium hydroxide as a catalyst. There were also charged 6,340 g of ethylene oxide and 1,590 g of propylene oxide, and after a reaction for 8 hours at 130°C, a neutralization-dehydration process was executed to obtain a trifunctional ethylene oxide-propylene oxide copolymer of a molecular weight of 8,000. 100 g of the obtained compound and 4.1 g of methyl chloroacetate were reacted at 60°C in the presence of an alkaline catalyst, followed by an alcoholation and a sulfuric acid treatment to obtain 90 g of carboxyl group-denatured polyether of a molecular weight of 8,140.

### [Example 3-8]

There were employed 1.6 g of a compound obtained by a following synthesis method 3-8 as the compound A, 10 g of a compound obtained by a following synthesis method 3-9 as the compound D, and 0.01 g of stannous octoate as a catalyst.

### (Synthesis method 3-8)

In a reaction vessel, 53.4 g of polyesterpolyol (manufactured by Toho Rika Co., trade name: Fantol PL-2010) and 34.8 g of tolylene diisocyanate were mixed and, with an addition of 0.05 g of dibutyl tin dilaurate as a catalyst, reacted at 80°C to obtain a compound.

### (Synthesis method 3-9)

In a reaction vessel, there were charged 106 g of diethylene glycol as a starting material and 24 g of potassium hydroxide as a catalyst. There were also charged 2,940 g of ethylene oxide and 1,980 g of propylene oxide, and after a reaction for 8 hours at 130°C, a neutralization-dehydration process was executed to obtain a bifunctional ethylene oxide-propylene oxide copolymer of a molecular weight of 4,980. 100 g of the obtained compound were reacted with 4.5 g of methyl chloroacetate at 60°C in the presence of an alkaline catalyst, followed by an alcoholation and a sulfuric acid treatment to obtain 90 g of carboxyl group-denatured polyether of a molecular weight of 5,000.

### [Example 3-9]

There were employed 2.5 g of a compound obtained by a following synthesis method 3-10 and 3.2 g of a compound obtained by the foregoing synthesis method 3-3 as the compounds A, 10 g of a compound obtained by a following synthesis method 3-11 as the compound D, and 0.01 g of tributylamine as a catalyst.

### (Synthesis method 3-10)

In a reaction vessel, 50 g of polycaprolactonediol (manufactured by Daicel Chemical Industries Ltd., trade name: Praxel CL205AL) and 34.8 g of tolylene diisocyanate were mixed and, with an addition of 0.05 g of dibutyl tin dilaurate as a catalyst, reacted at 80°C to obtain a compound.

### (Synthesis method 3-11)

In a reaction vessel, there were charged 106 g of diethylene glycol as a starting material and 9 g of potassium hydroxide as a catalyst. There were also charged 2,904 g of ethylene oxide, and after a reaction for 5 hours at 130°C, a neutralization-dehydration process was executed to obtain 2,900 g of a bifunctional ethylene oxide homopolymer, with a molecular weight of 3,010.

### [Example 3-10]

There were employed 25.3 g of a compound obtained by the foregoing synthesis method 3-3 as the compound A, 3 g of polycaprolactonetriol (manufactured by Daicel Chemical Industries, Ltd., trade name: Praxel L330AL) and a compound obtained by a following synthesis method 3-12 as the compounds D, and 0.02 g of triethylene diamine as a catalyst.

### (Synthesis method 3-12)

In a reaction vessel, there were charged 92 g of glycerin as a starting material and 10 g of potassium hydroxide as a catalyst. There were also charged 1,590 g of ethylene oxide and 3,310 g of propylene oxide, and after a reaction for 5 hours at 130°C, a neutralization-dehydration process was executed to obtain 4,930 g of a trifunctional ethylene oxide-propylene oxide copolymer of a molecular weight of 4,980.

### [Example 3-11]

There were employed 2.9 g of a compound obtained by a following synthesis method 3-13 as the compound A, 5 g of a compound obtained by a following synthesis method 3-14 and polycarbonatediol (manufactured by Daicel Chemical Industries, Ltd., trade name: Praxel CD220PL) as the compounds D, and 0.01 g of triethylamine as a catalyst.

### (Synthesis method 3-13)

In a reaction vessel, 50 g of polycarbonatediol (manufactured by Daicel Chemical Industries Ltd., trade name: Praxel CD205PL) and 34.8 g of tolylene diisocyanate were mixed and, with an addition of 0.05 g of dibutyl tin dilaurate as a catalyst, reacted at 80°C to obtain a compound.

### (Synthesis method 3-14)

In a reaction vessel, there were charged 106 g of trimethylol propane as a starting material, 3,980 g of ethylene oxide and 3,850 g of propylene oxide, and after a reaction for 8 hours at 130°C with 24 g of potassium hydroxide as a catalyst, a neutralization-dehydration process was executed to obtain 7,950 g of a trifunctional ethylene oxide-propylene oxide copolymer, with a molecular weight of 7,890.

### [Example 3-12]

There were employed 16.7 g of a compound obtained by the foregoing synthesis method 3-6 as the compound A, 10 g of a compound obtained by a following synthesis method 3-15 as the compound D, and 0.01 g of dibutyl tin dilaurate as a catalyst.

### (Synthesis method 3-15)

In a reaction vessel, there were charged 56 g of ethylene diamine as a starting material, 6,890 g of ethylene oxide and 3,020 g of propylene oxide, and after a reaction for 8 hours at 130°C with 30 g of potassium hydroxide as a catalyst, a neutralization-dehydration process was executed to obtain 9,730 g of a tetrafunctional ethylene oxide-propylene oxide copolymer, with a molecular weight of 9,940.

**Table 3**

| | Conversion efficiency (%) |
|---|---|
| Example 3-1 | 2.4 |
| Example 3-2 | 1.6 |
| Example 3-3 | 1.5 |
| Example 3-4 | 3.3 |
| Example 3-5 | 3.2 |
| Example 3-6 | 2.1 |
| Example 3-7 | 2.9 |
| Example 3-8 | 2.2 |
| Example 3-9 | 1.3 |
| Example 3-10 | 3.1 |
| Example 3-11 | 1.8 |
| Example 3-12 | 3.7 |

### INDUSTRIAL APPLICABILITY

The first dye-sensitized solar cell and the second dye-sensitized solar cell are constituted with a polymer electrolyte of an ionic conductivity comparable to that in the polymer-free redox liquid electrolyte, since the redox liquid electrolyte is retained stably and in a large amount in a three-dimensional network of a polymer compound, and can be produced with simpler process steps than in the prior technology and can achieve an easier control of the electrolyte composition.

Also the third dye-sensitized solar cell similarly has advantages of simpler process steps than in the prior technology and an easier control of the electrolyte composition, and also advantages of a higher mechanical strength because of the use of a polymer solid electrolyte, and absence of liquid leakage because of the absence of liquid electrolyte, thereby providing a higher prolonged stability and a higher reliability.

## Claims

1. A solar cell of dye sensitization type comprising a transparent substrate, a transparent conductive film formed on a surface thereof, and a conductive substrate provided in a position opposed to said transparent conductive film, and further comprising a porous semiconductor layer, in which a dye is adsorbed, and an electrolyte between said transparent conductive film and said conductive substrate:
**characterized in that** said electrolyte is a gel electrolyte containing a redox material and a solvent capable of dissolving said redox material in a network structure formed by crosslinking at least one kind of compound A including an isocyanate group and at least one kind of compound B including an amino group.

2. A solar cell of dye sensitization type according to claim 1, **characterized in that** at least either of said compounds A and B is a compound having a polymer structure of a molecular weight of 500 to 50,000.

3. A solar cell of dye sensitization type according to claim 2, **characterized in that** said polymer structure, either entirely or partially, is at least one selected from a group consisting of polyether, polyester, polycaprolactone, polysiloxane, polyolefin, polybutadiene, polyisoprene, polycarbonate and polyphosphazene.

4. A solar cell of dye sensitization type comprising a transparent substrate, a transparent conductive film formed on a surface thereof, and a conductive substrate provided in a position opposed to said transparent conductive film, and further comprising a porous semiconductor layer, in which a dye is adsorbed, and an electrolyte between said transparent conductive film and said conductive substrate:
**characterized in that** said electrolyte is a gel electrolyte containing a redox material and a solvent capable of dissolving said redox material in a network structure formed by crosslinking at least one kind of compound A including an isocyanate group and at least one kind of compound C including a carboxyl group and/or a hydroxyl group; and
that at least either of said compounds A and C is a compound having a polymer structure of a molecular weight of 500 to 100,000, and the polymer structure, either entirely or partially, is one or more selected from a group consisting of polyether, polyester, polycaprolactone, polysiloxane, polyvinylpyrrolidone, polycarbonate and polyphosphazene.

5. A solar cell of dye sensitization type according to any of claims 1 to 4, **characterized in that** said solvent is one or more selected from a group consisting of carbonates, ethers, lactones, nitriles and alcohols.

6. A solar cell of dye sensitization type according to any of claims 1 to 5, **characterized in that** said redox material is formed by iodine and an iodide.

7. A solar cell of dye sensitization type comprising a transparent substrate, a transparent conductive film formed on a surface thereof, and a conductive substrate provided in a position opposed to the transparent conductive film, and further comprising a porous semiconductor layer, in which a dye is adsorbed, and an electrolyte between said transparent conductive film and said conductive substrate:
**characterized in that** said electrolyte is a polymer solid electrolyte containing redox material in a network structure formed by crosslinking at least one kind of compound A including an isocyanate group and at least one kind of compound D reactive with said isocyanate group.

8. A solar cell of dye sensitization type according to claim 7, **characterized in that** said compound D has an active hydrogen group.

9. A solar cell of dye sensitization type according to claim 8, **characterized in that** said active hydrogen group of the compound D is one or more selected from a group consisting of a carboxyl group, an amino group and a hydroxyl group.

10. A solar cell of dye sensitization type according to any of claims 7 to 9, **characterized in that** at least either of said compounds A and D is a compound having a polymer structure of a molecular weight of 500 to 20,000.

11. A solar cell of dye sensitization type according to claim 10, **characterized in that** said polymer structure, either entirely or partially, is one or more selected from a group consisting of polyether, polyester, polycarbonate and polycaprolactone.

12. A solar cell of dye sensitization type according to claim 11, **characterized in that** said polyether has a structure represented by a following general formula (I) 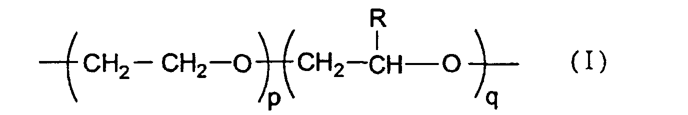 wherein R represents an alkyl group with 1 to 12 carbon atoms; and p and q each represents an integer equal to or larger than 0 but p and q do not assume 0 at the same time.

13. A solar cell of dye sensitization type according to any of claims 7 to 12, **characterized in that** said redox material is formed by iodine and an iodide.
